# EUROPÄISCHE PATENTSCHRIFT

(11) **EP 0 811 031 B1**
(45) Veröffentlichungstag und Bekanntmachung des Hinweises auf die Patenterteilung: **10.03.1999**
(21) Anmeldenummer: 96942179.1
(22) Anmeldetag: 19.12.1996
(51) Int. Cl.: C08J 9/06, C08L 1/02

(54) **VERFAHREN ZUR HERSTELLUNG EINES CELLULOSESCHWAMMS**
PROCESS FOR PRODUCING A CELLULOSE SPONGE
PROCEDE DE PRODUCTION D'UNE EPONGE EN CELLULOSE

(30) Priorität: 22.12.1995 AT 2100/95
(43) Veröffentlichungstag der Anmeldung: 10.12.1997
(73) Patentinhaber: LENZING AKTIENGESELLSCHAFT, 4860 Lenzing (AT)
(72) Erfinder: FIRGO, Heinrich, A-4840 Vöcklabruck (AT); AMBROSCH, Siegfried, A-4840 Vöcklabruck (AT); SCHWEIGART, Andreas, A-4880 St. Georgen (AT)
(74) Vertreter: Schwarz, Albin, Dr. Kopecky & Schwarz Patentanwälte
(86) Internationale Anmeldenummer: AT9600258
(87) Internationale Veröffentlichungsnummer: WO9723552

(56) Entgegenhaltungen:
- EP-A- 0 356 419
- EP-A- 0 418 151
- GB-A- 2 284 421
- CHEMICAL ABSTRACTS, vol. 117, no. 8, 24.August 1992 Columbus, Ohio, US; abstract no. 71941, XP002026945 & JP 04 076 025 A (J. HOSOKAWA ET AL.) 10.März 1992

## Beschreibung

Die Erfindung betrifft ein Verfahren zum Herstellung eines Celluloseschwammes.

Aus der EP-A - 0 418 151 ist ein Celluloseschwamm bekannt, der aus Viskose hergestellt wird. Gemäß diesem vorbekannten Verfahren wird Holzzellstoff in das Xanthat übergeführt, das Xanthat mit einem Porophor und Fasern vermischt, wonach Teilchen eines absorbierenden Polymers zugegeben werden, die von einer Polymerschicht überzogen sind. Anschließend wird das Xanthat mit Säure oder Base regeneriert und das Regenerat gewaschen und gebleicht.

Ein Nachteil dieses Verfahrens besteht darin, daß die Umweltverträglichkeit aufgrund der Nebenprodukte des Viskoseverfahrens zu wünschen übrig läßt.

Seit einigen Jahrzehnten wird nach Verfahren gesucht, welche das heute in großem Maßstab angewendete Viskoseverfahren ersetzen sollen. Als eine nicht zuletzt wegen einer besseren Umweltverträglichkeit interessante Alternative hat sich dabei herauskristallisiert, Cellulose ohne Derivatisierung in einem organischen Lösungsmittel aufzulösen und aus dieser Lösung Formkörper, z.B. Fasern, Folien und anderen Formkörpern, zu extrudieren. Solcherart extrudierte Fasern erhielten von der BISFA (The International Bureau for the Standardization of man made fibers) den Gattungsnamen Lyocell. Unter einem organischen Lösungsmittel wird von der BISFA ein Gemisch aus einer organischen Chemikalie und Wasser verstanden.

Es hat sich herausgestellt, daß sich als organisches Lösungsmittel insbesondere ein Gemisch aus einem tertiären Aminoxid und Wasser sehr gut zur Herstellung von cellulosischen Formkörpern eignet. Als Aminoxid wird dabei in erster Linie N-Methylmorpholin-N-oxid (NMMO) verwendet. Andere Aminoxide sind z.B. in der EP-A - 0 533 070 beschrieben. Ein Verfahren zur Herstellung formbarer Celluloselösungen ist z.B. aus der EP-A - 0 356 419 bekannt. Die Herstellung cellulosischer Gegenstände unter Anwendung tertiärer Aminoxide wird allgemein als Aminoxidverfahren bezeichnet.

In der EP-A - 0 356 419 ist ein Verfahren zur Herstellung von Celluloselösungen beschrieben, welches als Ausgangsmaterial u.a. eine Suspension von Cellulose in flüssigem, wäßrigem N-Methylmorpholin-N-oxid (NMMO) verwendet. Dieses Verfahren besteht darin, daß die Suspension in einem Dünnschichtbehandlungsapparat einstufig und kontinuierlich in eine formbare Lösung übergeführt wird. Die formbare Lösung wird schließlich in einem Formwerkzeug, z.B einer Spinndüse, zu Filamenten versponnen, die durch ein Fällbad geführt werden.

Die Cellulose wird aus der Lösung in einem wäßrigen Spinnbad ausgefällt. Dabei reichert sich das Spinnbad an Aminoxid an. Der Gehalt an Aminoxid in den dabei anfallenden Prozeßwässern beträgt bis zu 30 Gew.-%. Für die Wirtschaftlichkeit des Aminoxid-Verfahrens ist es von entscheidender Bedeutung, daß das Aminoxid nahezu vollständig zurückgewonnen und wiederverwendet wird.

In der Literatur ist über die Herstellung eines Celluloseschwammes nach dem Aminoxidverfahren praktisch nichts bekannt. Im Jahr 1988 wurde lediglich berichtet, daß nach einem neuen Verfahren gesucht werde, celluläre Cellulose, die Schwämmen ähnlich ist, aus einer Lösung von Cellulose in einem wäßrigen tertiären Aminoxid herzustellen. Es wird ferner berichtet, daß eine Reihe von Parametern, von welchen der Wassergehalt eine Hauptrolle spiele, die Herstellung beeinflusse, und daß die erhaltenen Produkte ähnlich jenen seien, die aus Viskose hergestellt werden (Peguy: "New Materials from Cellulose or Lignocellulose Solutions in Amine Oxides"; Proceedings of the Nisshinbo International Conference in Cellulosics Utilization in Near Future, Tokyo 1988, Seiten 19-24, Elsevier Applied Science). Eine nacharbeitbare Lehre zur Herstellung von Schwämmen aus den Celluloselösungen ist dieser Literaturstelle aber nicht zu entnehmen.

Die Erfindung setzt sich zum Ziel, einen Celluloseschwamm zur Verfügung zu stellen, der nach dem Aminoxidverfahren hergestellt werden soll.

Das erfindungsgemäße Verfahren zur Herstellung eines Celluloseschwammes ist dadurch gekennzeichnet, daß eine Lösung von Cellulose in einem wäßrigen tertiären Aminoxid mit einem Porenbildner und einem Treibmittel gemischt und anschließend Bedingungen ausgesetzt wird, die zu einer Zersetzung des Treibmittels und zu einer Aufschäumung der Celluloselösung führen, wonach die aufgeschäumte Celluloselösung mit Wasser in Kontakt gebracht wird, um die Cellulose zu fällen. Anschließend wird der erhaltene Celluloseschwamm mit Wasser vom tertiären Aminoxid freigewaschen.

Als Porenbildner wird bevorzugt ein Alkali- oder Erdalkalisalz einer anorganischen Säure eingesetzt, wobei sich insbesondere Natriumsulfat oder Magnesiumsulfat bewährt hat.

Der Porenbildner wird zweckmäßigerwiese in einer Menge eingesetzt, die maximal das Dreifache der Masse der eingesetzten Celluloselösung ausmacht.

Als Treibmittel wird bevorzugt Azodicarbonamid, welches gegebenenfalls modifiziert sein kann, oder Natriumhydrogencarbonat eingesetzt. Das Treibmittel muß so gewählt sein, daß keine exotherme Reaktion in der Celluloselösung ausgelöst wird. Es sollte vor allem keine Metallionen enthalten, die eine Zersetzung des tertiären Aminoxids auslösen können. Als Beispiel wird das Treibmittel Tracel DBN 120 NER der Firma Tramaco, Deutschland, genannt. Dieses Treibmittel hat eine Zersetzungstemperatur von 115°C.

Das Treibmittel wird zweckmäßigerweise in einer Menge eingesetzt, die zwischen 3% und 20% der Masse der eingesetzten Celluloselösung ausmacht.

Es hat sich gezeigt, daß der Gehalt an gelöster Cellulose in der eingesetzten Celluloselösung einen unmittelbaren Einfluß auf das Aufschäumverhalten besitzt. Je niedriger der Cellulosegehalt ist, desto höher ist der Aufschäumgrad und desto geringer ist der Zusammenhalt der einzelnen Poren des fertigen Celluloseschwammes. Dies bedeutet, daß die mechanische Widerstandsfestigkeit abnimmt. Ist der Cellulosegehalt andererseits zu hoch, nimmt die Aufschäumung derart ab, daß keine Porenstruktur mehr ausgebildet werden kann. Es hat sich ferner gezeigt, daß am besten zwischen 7 und 20 Masse% Cellulose enthalten sein sollten.

Es hat sich als besonders vorteilhaft erwiesen, wenn die eingesetzte Celluloselösung zusätzlich ungelöste Celluloseteilchen, z.B. Fasern, enthält. Diese Fasern dienen als Verstärkung. Ferner kann in die Celluloselösung neben dem Porenbildner und dem Treibmittel noch ein Pigment zur Farbgebung eingemischt werden.

Die Zersetzung des Treibmittels kann zweckmäßigerweise bei erhöhter Temperatur vorgenommen werden. Gegebenenfalls kann auch ein Unterdruckes angelegt werden.

Es hat sicher ferner gezeigt, daß sich im erfindungsgemäßen Verfahren N-Methylmorpholin-N-oxid als tertiäres Aminoxid besonders gut eignet.

Die aufgeschäumte Celluloselösung wird zur Fällung der gelösten Cellulose und zur Fixierung der Porenstruktur gegebenenfalls mit Wasser in Kontakt gebracht, welches Magnesiumchlorid enthält.

Als Cellulose können im erfindungsgemäßen Verfahren auch alternative Cellulosequellen, wie z.B. Alttextilien, Konfektionsabfälle und Altpapier und vieles andere mehr, eingesetzt werden.

Der erfindungsgemäß hergestellte Schwamm zeichnet sich durch ein hohes Wasserrückhaltevermögen und eine zufriedenstellende mechanische Festigkeit aus.

Wie unten dokumentiert ist, ist es erfindungsgemäß möglich, die mechanische Festigkeit und das Wasseraufnahmevermögen der erfindungsgemäßen Celluloseschwämme zu steuern bzw. einzustellen, wobei als Einflußgrößen die Cellulosekonzentration der verarbeiteten Lösung, das Molekulargewicht der eingesetzten Cellulose, die Konzentration an Porenbildner und die Konzentration an Treibmittel in der aufzuschäumenden Masse dienen können. Das erfindungsgemäße Verfahren belastet die Umwelt nicht, da das tertiäre Aminoxid aus dem Fällbad praktisch zur Gänze wiedergewonnen werden kann. Die erfindungsgemäß hergestellten Schwämme sind biologisch abbaubar und können auf einfache Weise kompostiert, entsorgt bzw. verbrannt werden, wobei bei der Verbrennung keine giftigen Abgase gebildet werden. Da sie - anders als herkömmliche Kunststoffschwämme - nicht aus Erdölprodukten hergestellt werden, vermindern sie den Erdölverbrauch. Die erfindungsgemäß hergestellten Schwämme können auch aus Altmaterialien hergestellt werden und tragen damit zu deren Entsorgung bei.

Die erfindungsgemäß hergestellten Celluloseschwämme eignen sich besonders gut als Badeschwämme und für Reinigungszwecke.

Mit den nachfolgenden Beispielen wird die Erfindung noch näher erläutert.

### Allgemeine Arbeitsvorschrift

Gemahlener Zellstoff mit einem Polymerisationsgrad zwischen 400 und 1500, z.B. Alicell LV oder ein anderer Zellstoff, wird in einer wäßrigen NMMO-Lösung in einem Kneter vermischt, auf maximal 90°C erhitzt und ein Unterdruck von mindestens 0,05 bar angelegt, um Wasser abzudampfen und den Zellstoff so weit zu lösen, daß etwa 2,5% des eingesetzten Zellstoffes in noch ungelöstem, gequollenem Zustand vorliegen. Anschließend werden der Porenbildner und das Treibmittel dem Kneter zugesetzt und eingemischt. Die erhaltene Mischung wird etwa 5-10 Minuten bei 90°C geknetet.

Das Aufschäumen der Mischung erfolgt in einem Wärmeschrank unter Bedingungen, bei welchen das Treibmittel unter Gasentwicklung zersetzt werden kann. Beispielhaft wird für das Treibmittel Azodicarbonamid eine Erhitzung auf eine Temperatur von 130°C in einem Zeitraum von 10-20 Minuten genannt, wobei ein Unterdruck von 600 mbar angelegt werden kann.

Die aufgeschäumte Masse wird in ein Wasserbad gegeben, in welchem die Cellulose gefällt und die Struktur der aufgeschäumten Masse fixiert wird, wobei ein Celluloseschwamm erhalten wird, der anschließend von tertiärem Aminoxid freigewaschen und auf eine Restfeuchte von 10-15% getrocknet wird.

Gemäß der obigen, allgemeinen Arbeitsvorschrift wurden mehrere Reihen von Celluloseschwämmen hergestellt, wobei
- für die Reihe (A) Celluloselösungen mit variierender Cellulosekonzentration eingesetzt wurden (Zellstoff: Alicell LV, 100 g; Treibmittel: Tracel DBN 120 NER, 10 g; Na₂SO₄ (wasserfrei), 30 g);
- für die Reihe (B) Zellstoffe mit verschiedenen Molekulargewichten der enthaltenen Cellulose eingesetzt wurden (Zellstoffe: 100 g; Cellulosekonzentration: 13%; Treibmittel: Tracel DBN 120 NER, 10 g; Na₂SO₄ (wasserfrei), 30 g);
- für die Reihe (C) der Gehalt an Natriumsulfat variiert wurde (Zellstoff: Alttextilien; Cellulosekonzentration: 13%; Treibmittel: Tracel DBN 120 NER, 10 g); und
- für die Reihe (D) der Gehalt an Treibmittel variiert wurde (Zellstoff: Viscokraft LV; Cellulosekonzentration: 13%; Treibmittel: Tracel DBN 120 NER).

Die hergestellten Celluloseschwämme wurden mit der Gewichtsmethode auf ihre Wasseraufnahmefähigkeit geprüft. Die Wasseraufnahme ist der mit der Zahl 100 muliplizierte Quotient aus dem Gewicht des nassen Schwammes und des trocknenen Schwammes (100 x Gewicht_{naß}/Gewicht_{trocken}).

Die Ergebnisse sind in den nachfolgenden Tabellen 1 bis 4 zusammengefaßt. Diesen Ergebnissen kann entnommen werden, daß das Wasseraufnahmevermögen bei abnehmender Cellulosekonzentration, abnehmendem Molekulargewicht der eingesetzten Cellulose, zunehmender Konzentration an Porenbildner und zunehmender Konzentration an Treibmittel (Tracel DBN 120 NER; Hersteller: Tramaco, DE) zunimmt.

Die mechanische Festigkeit aller hergestellten Celluloseschwämme war zufriedenstellend.

**Tabelle 1**

| Cellulosekonzentration (%) | Wasseraufnahmevermögen (%) |
|---|---|
| 10 | 760 |
| 13 | 530 |
| 15 | 280 |

**Tabelle 2**

| Cellulose (Molekulargewicht) | Wasseraufnahmevermögen (%) |
|---|---|
| 463 | 595 |
| 755 | 460 |
| 870 | 530 |
| 1285 | 406 |
| 1473 | 373 |

**Tabelle 3**

| Na₂SO₄ (%) | Wasseraufnahmevermögen (%) |
|---|---|
| 30 | 515 |
| 50 | 750 |
| 70 | 835 |
| 100 | 955 |

**Tabelle 4**

| Treibmittel (%) | Wasseraufnahmevermögen (%) |
|---|---|
| 3 | 465 |
| 5 | 555 |
| 7 | 650 |

## Patentansprüche

1. Verfahren zur Herstellung eines Celluloseschwammes, dadurch gekennzeichnet, daß eine Lösung von Cellulose in einem wäßrigen tertiären Aminoxid mit einem Porenbildner und einem Treibmittel gemischt und anschließend Bedingungen ausgesetzt wird, die zu einer Zersetzung des Treibmittels und zu einer Aufschäumung der Celluloselösung führen, wonach die aufgeschäumte Celluloselösung mit Wasser in Kontakt gebracht wird, um die Cellulose zu fällen.

2. Verfahren nach Anspruch 1, dadurch gekennzeichnet, daß als Porenbildner ein Alkali- oder Erdalkalisalz einer anorganischen Säure eingesetzt wird.

3. Verfahren nach Anspruch 2, dadurch gekennzeichnet, daß als Porenbildner Natriumsulfat oder Magnesiumsulfat eingesetzt wird.

4. Verfahren nach Anspruch 3, dadurch gekennzeichnet, daß der Porenbildner in einer Menge eingesetzt wird, die maximal das Dreifache der Masse der eingesetzten Celluloselösung ausmacht.

5. Verfahren nach Anspruch 1, dadurch gekennzeichnet, daß als Treibmittel Azodicarbonamid, welches gegebenenfalls modifiziert sein kann, oder Natriumhydrogencarbonat eingesetzt wird.

6. Verfahren nach Anspruch 4, dadurch gekennzeichnet, daß das Treibmittel in einer Menge eingesetzt wird, die zwischen 3% und 20% der Masse der eingesetzten Celluloselösung ausmacht.

7. Verfahren nach Anspruch 1, dadurch gekennzeichnet, daß eine Celluloselösung eingesetzt wird, die zwischen 7 und 20 Masse% Cellulose enthält.

8. Verfahren nach Anspruch 7, dadurch gekennzeichnet, daß die Celluloselösung zusätzlich ungelöste Celluloseteilchen enthält.

9. Verfahren nach Anspruch 1, dadurch gekennzeichnet, daß in die Celluloselösung noch zusätzlich ein Pigment eingemischt wird.

10. Verfahren nach Anspruch 1, dadurch gekennzeichnet, daß die Zersetzung des Treibmittels bei erhöhter Temperatur vorgenommen wird.

11. Verfahren nach einem der Ansprüche 1 bis 10, dadurch gekennzeichnet, daß das tertiäre Aminoxid N-Methylmorpholin-N-oxid ist.

12. Verfahren nach Anspruch 1, dadurch gekennzeichnet, daß die aufgeschäumte Celluloselösung mit Wasser in Kontakt gebracht wird, welches Magnesiumchlorid enthält.

13. Verfahren nach einem der Ansprüche 1 bis 12, dadurch gekennzeichnet, daß als Cellulose alternative Cellulosequellen eingesetzt werden.

14. erfahren nach Anspruch 13, dadurch gekennzeichnet, daß als alternative Cellulosequellen Alttextilien, Konfektionsabfälle oder Altpapier eingesetzt werden.

## Claims

1. Process for producing a cellulose sponge, characterized in that a solution of cellulose is mixed with a pore former and a propellant in an aqueous tertiary amine oxide and is then exposed to conditions which result in a decomposition of the propellant and in foaming of the cellulose solution, after which the foamed cellulose solution is brought into contact with water to precipitate the cellulose.

2. Process according to Claim 1, characterized in that an alkali salt or an alkaline-earth salt of an inorganic acid is used as pore former.

3. Process according to Claim 2, characterized in that sodium sulphate or magnesium sulphate is used as pore former.

4. Process according to Claim 3, characterized in that the pore former is used in an amount which is at most three times the mass of the cellulose solution used.

5. Process according to Claim 1, characterized in that azodicarbonamide, which may optionally be modified, or sodium hydrogen carbonate is used as propellant.

6. Process according to Claim 4, characterized in that the propellant is used in an amount which is between 3% and 20% of the mass of the cellulose solution used.

7. Process according to Claim 1, characterized in that a cellulose solution is used which contains between 7 and 20% by mass of cellulose.

8. Process according to Claim 7, characterized in that the cellulose solution additionally contains undissolved cellulose particles.

9. Process according to Claim 1, characterized in that a pigment is also additionally added to the cellulose solution.

10. Process according to Claim 1, characterized in that the propellant is decomposed at elevated temperature.

11. Process according to one of Claims 1 to 10, characterized in that the tertiary amine oxide is N-methylmorpholine N-oxide.

12. Process according to Claim 1, characterized in that the foamed cellulose solution is brought into contact with water which contains magnesium chloride.

13. Process according to one of Claims 1 to 12, characterized in that alternative cellulose sources are used as cellulose.

14. Process according to Claim 13, characterized in that used textiles, clothing industry wastes or waste paper are used as alternative cellulose sources.

## Revendications

1. Procédé de fabrication d'une éponge en cellulose, caractérisé en ce que l'on mélange une solution de cellulose dans un aminoxyde tertiaire aqueux avec un agent porogène et un agent gonflant et on expose ensuite le mélange à des conditions qui conduisent à une décomposition de l'agent gonflant et à une expansion ou moussage de la solution de cellulose, puis on met la solution de cellulose expansée ou moussée en contact avec de l'eau, afin de précipiter la cellulose.

2. Procédé suivant la revendication 1, caractérisé en ce que l'on utilise, à titre d'agent porogène, un sel de métal alcalin ou de métal alcalino-terreux d'un acide inorganique.

3. Procédé suivant la revendication 2, caractérisé en ce que l'on utilise, à titre d'agent porogéne, le sulfate de sodium ou le sulfate de magnésium.

4. Procédé suivant la revendication 3, caractérisé en ce que l'on utilise l'agent porogène en une quantité qui constitue au maximum trois fois la masse de la solution de cellulose mise en oeuvre.

5. Procédé suivant la revendication 1, caractérisé en ce que, à titre d'agent gonflant, on utilise un azodicarbonamide, qui peut éventuellement être modifié, ou l'hydrogénocarbonate de sodium.

6. Procédé suivant la revendication 4, caractérisé en ce que l'on utilise l'agent gonflant en une quantité qui constitue de 3% à 20% de la masse de la solution de cellulose mise en oeuvre.

7. Procédé suivant la revendication 1, caractérisé en ce que l'on utilise une solution de cellulose qui contient de 7 à 20% massiques de cellulose.

8. Procédé suivant la revendication 7, caractérisé en ce que la solution de cellulose contient complémentairement des particules de cellulose non dissoutes.

9. Procédé suivant la revendication 1, caractérisé en ce que l'on incorpore encore complémentairement un pigment à la solution de cellulose.

10. Procédé suivant la revendication 1, caractérisé en ce que l'on entreprend la décomposition de l'agent gonflant à température élevée.

11. Procédé suivant l'une quelconque des revendications 1 à 10, caractérisé en ce que l'aminoxyde tertiaire est le N-méthylmorpholine-N-oxyde.

12. Procédé suivant la revendication 1, caractérisé en ce que l'on met la solution de cellulose expansée ou moussée en contact avec de l'eau qui contient du chlorure de magnésium.

13. Procédé suivant l'une quelconque des revendications 1 à 12, caractérisé en ce que, à titre de cellulose, on utilise d'autres sources de cellulose.

14. Procédé suivant la revendication 13, caractérisé en ce qu'à titre d'autres sources de cellulose, on utilise de vieilles matières textiles, des déchets ou chutes de confection, ou des vieux papiers.
